# EUROPEAN PATENT APPLICATION

(11) **EP 4 131 771 A1**
(43) Date of publication of application: **08.02.2023**
(21) Application number: 21781978.8
(22) Date of filing: 23.03.2021
(51) Int. Cl.: H02P 27/06, F16C 32/04, H02P 3/18

(54) **DRIVE DEVICE**

(30) Priority: 31.03.2020 JP 2020062594
(71) Applicant: Daikin Industries, Ltd., Osaka-shi, Osaka 530-0001 (JP)
(72) Inventor: SAKAWAKI, Atsushi, Osaka-shi, Osaka 530-8323 (JP); IRINO, Yuusuke, Osaka-shi, Osaka 530-8323 (JP); NAKAZAWA, Yuuji, Osaka-shi, Osaka 530-8323 (JP)
(74) Representative: Goddar, Heinz J.
(86) International application number: PCT/JP2021/011899
(87) International publication number: WO 2021/200375

(57) **Abstract**

A technique is provided with which an increase in the current capacity of a drive part to electrically drive a magnetic shaft support mechanism of a turbo compressor can be suppressed.

A drive device (100) is provided with a DC link circuit (40); a rectifier circuit (30) to convert power of an external power supply (PS) into DC power to supply the converted power to the DC link circuit (40); an electric motor (10) to rotationally drive a compression mechanism; a magnetic shaft support part (20) to magnetically support the rotating shaft of the compression mechanism; an inverter circuit (60) to drive the electric motor (10) with the power from the DC link circuit (40), and cause the electric motor (10) to execute regenerative operations to convert the power from the rotating shaft of the compression mechanism into electric energy, so as to be capable of outputting the regenerative power to the DC link circuit (40); and a power amplifier circuit (70) to drive the magnetic shaft support part (20) with the power from the DC link circuit (40), wherein the inverter circuit (60) causes the electric motor (10) to execute regenerative operations so that the voltage of the DC link circuit (40) becomes higher than the voltage of the DC link circuit (40) when the power of the external power supply (PS) is normally supplied.

## Description

### [Technical Field]

The present disclosure relates to a drive apparatus.

### [Background Art]

For example, a technique has been known for continuing, upon a power stoppage, an operation state of operations of a magnetic shaft support mechanism driven by electric power from a DC link circuit, by causing an electric motor to execute deceleration operations, and regenerating electric power from the electric motor to the DC link circuit (see Patent Literature 1).

### [Related Art Documents]

### [Patent Documents]

[Patent Document 1] Japanese Laid-Open Patent Application No. 2010-200524

### [Summary of the Invention]

### [Problem to be Solved by the Invention]

Meanwhile, in some cases, a magnetic shaft support mechanism is applied to a turbo compressor that is electrically driven by an electric motor.

However, in such a turbo compressor, if the electric motor is decelerated in an operation state of the differential pressure between the preceding stage and the following stage being very high, there is a likelihood that a surging phenomenon occurs, and the fluctuation of the force acting on the impeller from the working fluid becomes very large. In this case, the shaft support mechanism needs to generate an electromagnetic force having a magnitude and a response speed to resist the load fluctuation due to the surging phenomenon. Therefore, for example, in the case where the voltage of the DC link circuit during the regenerative running of the electric motor is relatively low, in order to achieve the response speed of the electromagnetic force to resist the load fluctuation due to the surging phenomenon occurring with deceleration of the electric motor, it may be necessary to reduce the number of turns of the coil of the shaft support mechanism. Also, for example, in the case where the voltage of the DC link circuit during the regenerative running of the electric motor is relatively low, in order to achieve the magnitude of the electromagnetic force to resist the load fluctuation due to the surging phenomenon occurring with deceleration of the electric motor, it may be necessary to increase the flowing current. Therefore, as a consequence, there is a likelihood that the current capacity of the drive part that drives the shaft support mechanism becomes relatively large.

The present disclosure has an object to provide a technique that can suppress an increase in the current capacity of a drive part to electrically drive a magnetic shaft support mechanism of a turbo compressor.

### [Means for Solving Problem]

In one embodiment according to the present disclosure, a drive apparatus is provided that includes:
a DC link part;
a rectifier part configured to convert power of an external power supply into predetermined DC power, and supply the DC power to the DC link part;
an electric motor part configured to rotationally drive a compression mechanism;
a support part configured to magnetically support a rotating shaft of the compression mechanism;
a first drive part configured to drive the electric motor part with electric power from the DC link part, to cause the electric motor part to execute regenerative operations of converting power from the rotating shaft into electric energy, and to output regenerative electric power to the DC link part; and
a second drive part configured to drive the support part with the electric power from the DC link part,
wherein the first drive part causes the electric motor part to execute the regenerative operations so that a voltage of the DC link part becomes higher than a voltage of the DC link part when the electric power of the external power supply is normally supplied.

According to the present embodiment, the drive apparatus can make the link voltage during the regenerative operations of the electric motor higher than the voltage when electric power is normally supplied from the external power supply PS (e.g., the voltage during the power running of the electric motor). Therefore, a response speed of the electromagnetic force to resist the load fluctuation due to a surging phenomenon generated with deceleration of the electric motor during regenerative operations can be achieved with the support part including a coil having a relatively large number of turns. Also, a magnitude of the electromagnetic force to resist the load fluctuation due to a surging phenomenon generated with deceleration of the electric motor during regenerative operations can be achieved with a relatively small current flowing through the support. Therefore, an increase in the current capacity of the second drive part circuit that drives the support part can be suppressed.

Also, in the embodiment described above, the first drive part may cause the electric motor part to execute the regenerative operations during a power stoppage in which power supply from the external power supply to the rectifier part is stopped.

Also, in the embodiments described above, the drive apparatus may further include:
a limiting element provided between the rectifier part and the DC link part, and configured to be capable of limiting a current from the external power supply; and
a connection/disconnection part configured to make a power path that short-circuits both ends of the limiting element, switch between a connected state and a disconnected state,
wherein the connection/disconnection part makes the power path switch to the connected state during a power stoppage in which power supply from the external power supply to the rectifier part is stopped.

### [Advantageous Effects of the Invention]

According to an embodiment as described above, an increase in the current capacity of a drive part to electrically drive a magnetic shaft support mechanism of a turbo compressor can be suppressed.

### [Brief Description of the Drawings]

FIG. 1 is a diagram illustrating an example of a configuration of a turbo compressor;
FIG. 2 is a diagram illustrating an example of a configuration of a magnetic shaft support part and a power amplifier circuit;
FIG. 3 is a diagram illustrating another example of a configuration of the magnetic shaft support part and the power amplifier circuit;
FIG. 4 is a time chart illustrating an example of a regenerative link voltage command;
FIG. 5 is a time chart illustrating operations of a turbo compressor according to a comparative example; and
FIG. 6 is a time chart illustrating operations of a turbo compressor according to an embodiment.

### [Embodiments for Carrying Out the Invention]

In the following, with reference to the drawings, embodiments will be described.

### [Configuration of turbo compressor]

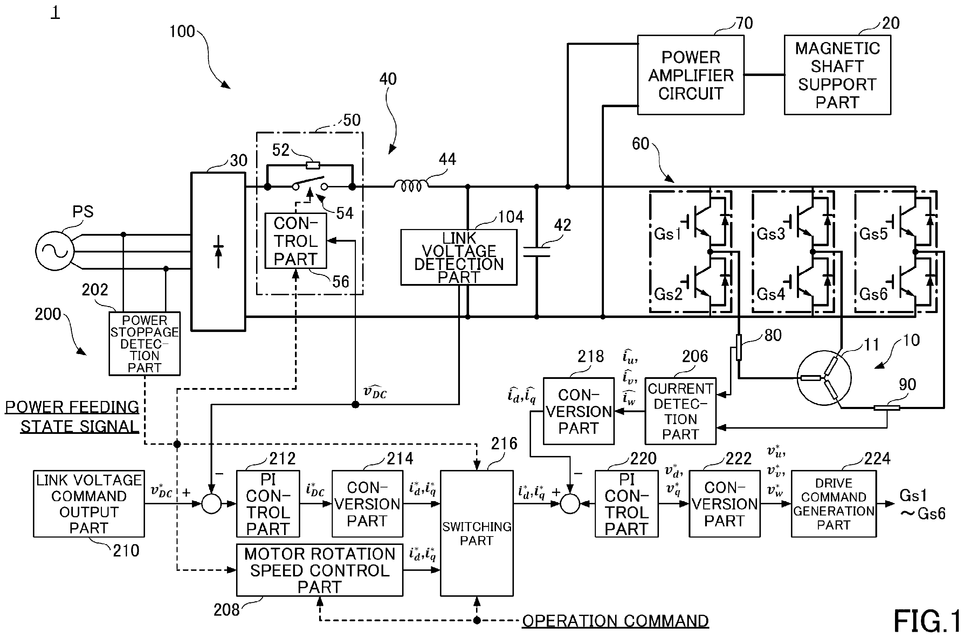

First, with reference to FIGs. 1 to 4, a configuration of a turbo compressor 1 according to the present embodiment will be described.

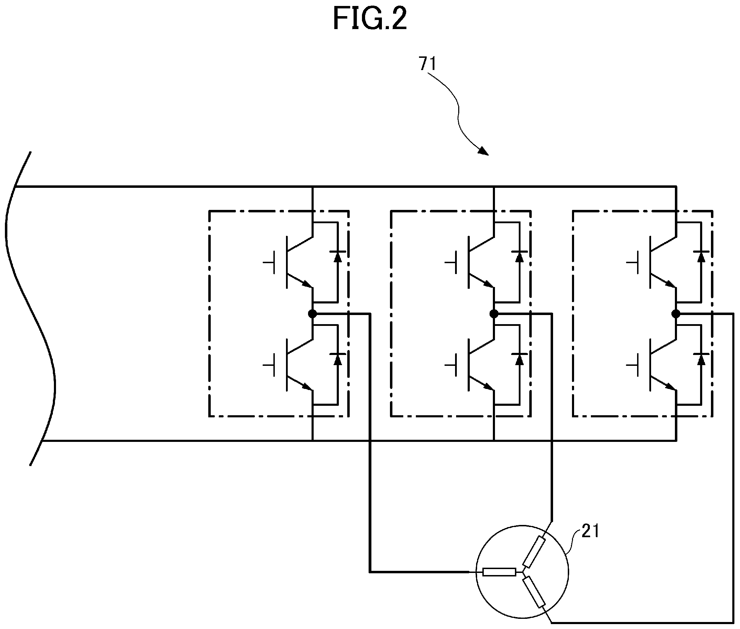

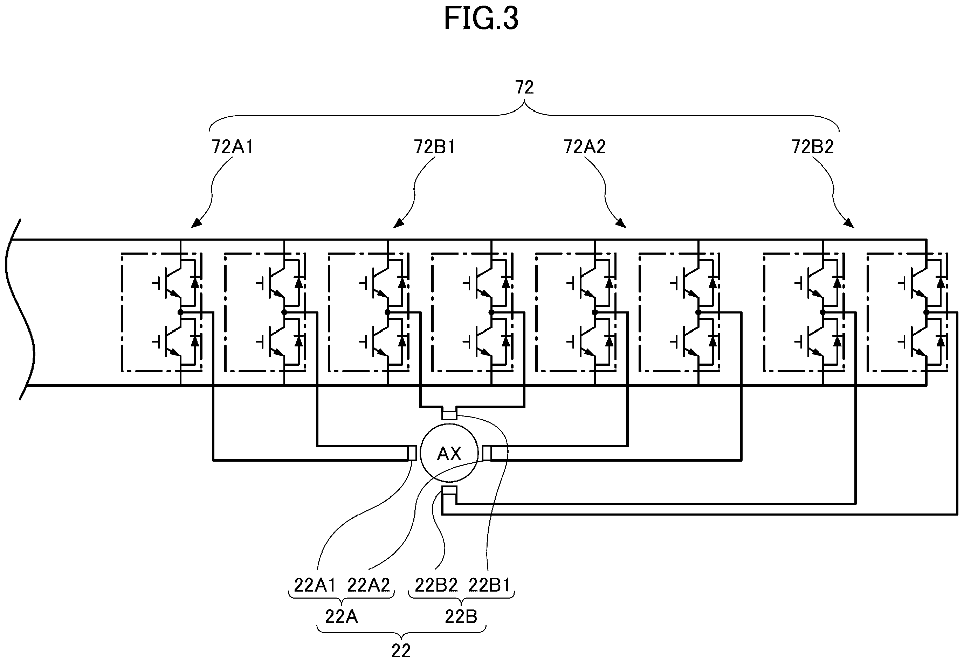

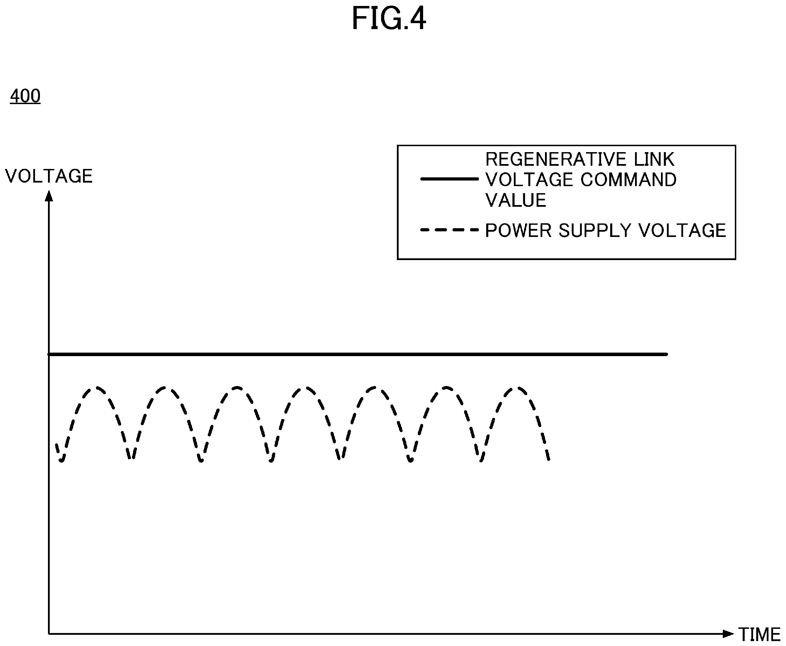

FIG. 1 is a diagram illustrating an example of a configuration of the turbo compressor 1 according to the present embodiment, focusing on a drive system; FIG. 2 is a diagram illustrating an example of a configuration of a magnetic shaft support part 20 and a power amplifier circuit 70; FIG. 3 is a diagram illustrating another example of a configuration of the magnetic shaft support part 20 and the power amplifier circuit 70; and FIG. 4 is a time chart illustrating an example of a regenerative link voltage command.

As illustrated in FIG. 1, the turbo compressor 1 includes a drive apparatus 100 and a control device 200.

The drive apparatus 100 includes an electric motor 10, a magnetic shaft support part 20, a rectifier circuit 30, a DC link circuit 40, an inrush current suppression circuit 50, an inverter circuit 60, a power amplifier circuit 70, and current sensors 80 and 90.

The electric motor 10 (an example of an electric motor part) rotationally drives the compression mechanism of the turbo compressor 1. The electric motor 10 includes an electric motor winding 11 provided on a stator.

The magnetic shaft support part 20 (an example of a support part) magnetically supports the rotating shaft of the compression mechanism of the turbo compressor 1, i.e., the rotating shaft of the electric motor 10.

As illustrated in FIG. 2, the magnetic shaft support part 20 is, for example, a shaft support winding 21. The shaft support winding 21 is provided on the stator of the electric motor 10 together with the electric motor winding 11, to generate an electromagnetic force to support the rotating shaft of the turbo compressor 1 (electric motor 10). In this case, the electric motor 10 corresponds to a what-is-called bearingless motor.

Note that the magnetic shaft support part 20 may include a thrust magnetic bearing to support the rotation axis AX of the turbo compressor 1 (electric motor 10) in a thrust direction, instead of or in addition to the shaft support winding 21. In this case, the thrust magnetic bearing includes, for example, two electromagnets arranged to face each other in a form having a disk-shaped part provided at one end of the rotating shaft of the turbo compressor 1 (electric motor 10) interposed therebetween in the thrust direction.

Also, as illustrated in FIG. 3, the magnetic shaft support part 20 is, for example, magnetic bearings 22. The magnetic bearings 22 include a radial magnetic bearing 22A provided at one end of the rotation axis AX of the turbo compressor 1 (electric motor 10), and a radial magnetic bearing 22B provided at the other end of the rotation axis AX.

At the one end of the rotation axis AX, the radial magnetic bearing 22A includes electromagnets 22A1 and 22A2 arranged to face each other in a form having the rotation axis AX interposed therebetween. Similarly, at the other end of the rotation axis AX, the radial magnetic bearing 22B includes electromagnets 22B1 and 22B2 arranged to face each other in a form having the rotation axis AX interposed therebetween.

Note that the magnetic shaft support part 20 (magnetic bearings 22) may include a thrust magnetic bearing to support the rotation axis AX of the turbo compressor 1 (electric motor 10) in a thrust direction, instead of or in addition to the radial magnetic bearings 22A and 22B.

Referring back to FIG. 1, the rectifier circuit 30 (an example of a rectifier part) rectifies AC power supplied from an external power supply PS, and outputs predetermined DC power to the DC link circuit 40. The rectifier circuit 30 is, for example, a bridge-type full-wave rectifier circuit in which six diodes are configured in a bridge shape.

The DC link circuit 40 (an example of a DC link part) is electrically connected to each of the rectifier circuit 30, the inverter circuit 60, and the power amplifier circuit 70.

The DC link circuit 40 includes a power storage part 42 and a coil part 44 for smoothing DC power output from the rectifier circuit 30 and the inverter circuit 60 as will be described later.

For example, the DC link circuit 40 smooths the DC power output from the rectifier circuit 30, and supplies the smoothed DC power to each of the inverter circuit 60 and the power amplifier circuit 70.

Also, for example, as will be described later, the DC link circuit 40 smooths the regenerative electric power output from the inverter circuit 60 in response to deceleration operations of the electric motor 10 when a predetermined abnormality occurs in the turbo compressor 1 in which the electric motor 10 is to be decelerated, and supplies the smoothed regenerative electric power to the power amplifier circuit 70. The predetermined abnormality includes, for example, a power stoppage in which the power supply from the external power supply PS to the drive apparatus 100 is stopped. Also, the predetermined abnormality includes, for example, an abnormality in the circuit operation of the drive apparatus 100, an occurrence of abnormal vibration of the rotating shaft of the turbo compressor 1 (electric motor 10), an occurrence of communication abnormality in the control device 200, and the like.

The power storage part 42 is arranged in parallel with the rectifier circuit 30, the inverter circuit 60, and the power amplifier circuit 70 on a power path that makes a connection between a positive-side bus and a negative-side bus. While appropriately repeating charging and discharging, the power storage part 42 smooths the DC power output from the rectifier circuit 30 and the inverter circuit 60. The power storage part 42 is, for example, an electrolytic capacitor.

The coil part 44 is provided on the positive-side bus, to be closer to the rectifier circuit 30 than the power storage part 42, and in series with the rectifier circuit 30, the inverter circuit 60, and the power amplifier circuit 70. While appropriately generating a voltage so as to hinder a change in current, the coil part 44 smooths the DC power output from the rectifier circuit 30 and the inverter circuit 60. The coil part 44 is, for example, a DC reactor.

The inrush current suppression circuit 50 is provided between the rectifier circuit 30 and the DC link circuit 40, to suppress an inrush current that may flow in the DC link circuit 40. The inrush current suppression circuit 50 includes a resistor 52, a switch 54, and a control part 56.

The resistor 52 (an example of a limiting element) is provided on the positive-side bus that connects the rectifier circuit 30 and the DC link circuit 40 (the coil part 44). The resistor 52 limits the current output from the external power supply PS to the DC link circuit 40 via the rectifier circuit 30.

The switch 54 (an example of a connection/disconnection part) is arranged on an electric wire (hereafter, referred to as the "short-circuit path") that short-circuits both ends of the resistor 52, and switches the short-circuit path between a connected state (i.e., a closed state) and a disconnected state (i.e., an open state). The switch 54 is, for example, a normally open type that is normally in a cut-off state (open state), and is switched to the cut-off state (open state) in response to a control command from the control part 56. The switch 54 is, for example, a switching element such as a thyristor, triac, or relay.

The control part 56 executes switching control of the switch 54 between the connected state and the disconnected state. Specifically, the control part 56 takes in a signal related to a power feeding state from the external power supply PS to the drive apparatus 100 (hereafter, referred to as the "power feeding state signal"), that is output from a power stoppage detection part 202 as will be described later. Accordingly, the control part 56 can recognize whether the power supply from the external power supply PS to the drive apparatus 100 is in a power stoppage state in which the power is stopped. Also, the control part 56 takes in a signal (a link voltage detection value v^_{DC}) related to the voltage of the DC link circuit 40 (hereafter, referred to as the "link voltage"), that is output from a link voltage detection part 204 as will be described later. Accordingly, the control part 56 can recognize the link voltage.

The control part 56 normally maintains the switch 54 in the connected state (closed state). Meanwhile, for example, in the case where electric power is supplied from the external power supply PS to the drive apparatus 100, and the link voltage is relatively low, the control part 56 may output a control command to the switch 54 to cause the switch 54 to transition to the cut-off state (open state). Accordingly, for example, when the power is turned on to connect the turbo compressor 1 to the external power supply PS, the control part 56 can output a control command to the switch 54 to cause the switch 54 to transition to the cut-off state (open state). Therefore, the short-circuit path connecting both ends of the resistor 52 is cut, and the current output from the rectifier circuit 30 flows through the resistor 52; therefore, by the effect of the resistor 52, an inrush current that may be generated when the power of the turbo compressor 1 is turned on can be suppressed.

The inverter circuit 60 (an example of a first drive part) can electrically drive the electric motor 10, by generating three-phase AC power from DC power supplied from the DC link circuit 40, and supplying the three-phase AC power to the electric motor winding 11. Also, the inverter circuit 60 can cause the electric motor 10 to execute regenerative operations to convert power of the rotating shaft of the turbo compressor 1 (electric motor 10) into electric energy, and output regenerative electric power to the DC link circuit 40. As illustrated in FIG. 1, for example, the inverter circuit 60 is configured by arranging three series connection bodies (switching legs) in parallel so as to make connections between the positive-side bus and the negative-side bus, where each of the series connection bodies is formed by arranging two arms in series, and each of the arms is configured by arranging a switching element and a circulation diode in parallel. In addition, a U-phase terminal, a V-phase terminal, and a W-phase terminal are drawn out from the respective intermediate points between the upper and lower arms of the three switching legs of the inverter circuit 60.

The power amplifier circuit 70 (an example of a second drive part) generates predetermined electric power from the DC power supplied from the DC link circuit 40, and supplies the generated power to the magnetic shaft support part, to electrically drive the magnetic shaft support part 20.

For example, as illustrated in FIG. 2, the power amplifier circuit 70 is an inverter circuit 71. The inverter circuit 71 generates three-phase AC power from the DC power supplied from the DC link circuit 40, and supplies the three-phase AC power to the U-phase, V-phase, and W-phase windings of the shaft support winding 21, to electrically drive the shaft support winding 21. Similar to the inverter circuit 60, the inverter circuit 71 is configured by arranging three series connection bodies (switching legs) in parallel so as to make connections between the positive-side bus and the negative-side bus, where each of the series connection bodies is formed by arranging two arms in series, and each of the arms is configured by arranging a switching element and a circulation diode in parallel.

Also, for example, as illustrated in FIG. 3, the power amplifier circuit 70 is an H-bridge circuit 72. The H-bridge circuit 72 generates predetermined electric power from the DC power supplied from the DC link circuit 40, and supplies the electric power to the electromagnets 22A1, 22A2, 22B1, and 22B2, to electrically drive the radial magnetic bearings 22A and 22B. The H-bridge circuit 72 includes H-bridge circuits 72A1, 72A2, 72B1, and 72B2 that supply electric power to the electromagnets 22A1, 22A2, 22B1, and 22B2, respectively.

Note that as described above, in the case where the magnetic shaft support part 20 includes a thrust magnetic bearing, the power amplifier circuit 70 may include, for example, two H-bridge circuits that supply electric power to two electromagnets included in the thrust magnetic bearing, respectively.

The current sensors 80 and 90 output signals related to a current flowing through any two of the U-phase, V-phase, and W-phase electric motor windings 11 of the electric motor 10. The current sensors 80 and 90 are, for example, current transformers (CT). The output signals of the current sensors 80 and 90 are taken into the control device 200.

The control device 200 executes control related to the drive apparatus 100.

Functions of the control device 200 may be implemented by any hardware components, a combination of any hardware components and software components, or the like. The control device 200 includes, for example, a computer constituted with a central processing unit (CPU), a memory device such as a random access memory (RAM), an auxiliary storage device such as a read-only memory (ROM), an interface device for inputting and outputting with the outside, and the like.

The control device 200 includes a power stoppage detection part 202, a link voltage detection part 204, and a current detection part 206. The control device 200 also includes a rotation speed control part 208, a link voltage command output part 210, a proportional integral (PI) control part 212, a conversion part 214, a switching part 216, a conversion part 218, a PI control part 220, a conversion part 222, and a drive command generation part 224.

The power stoppage detection part 202 determines a supply state of electric power from the external power supply PS to the drive apparatus 100 (the rectifier circuit 30), to detect a power stoppage upon which the supply of electric power to the external power supply PS is stopped. The power stoppage detection part 202 detects, for example, a crossing (zero crossing) of the voltage of the AC power in the power path between the external power supply PS and the drive apparatus 100 with a zero reference voltage, to determine the supply state of electric power from the external power supply PS to the drive apparatus 100 (the rectifier circuit 30). In this case, the zero reference voltage may be a constant voltage that deviates somewhat from 0 V (volts), and the amount of deviation of the zero reference voltage from 0 V may be specified in advance based on the magnitude of the expected noise. Accordingly, erroneous detection of zero crossing due to noise can be suppressed. The power stoppage detection part 202 outputs a signal indicating a supply state of electric power from the external power supply PS to the drive apparatus 100.

The link voltage detection part 204 detects a link voltage of the DC link circuit 40 (i.e., a voltage between the positive-side and negative-side bus lines). The link voltage detection part 204 outputs a signal related to the link voltage of the DC link circuit 40. The signal output from the link voltage detection part 204 includes, for example, the link voltage detection value v^_{DC}.

The current detection part 206 detects the respective currents of the U-phase, the V-phase, and the W-phase of the electric motor 10 (electric motor winding 11) based on the signals taken in from the current sensors 80 and 90. The current detection part 206 outputs signals related to the detected U-phase, V-phase, and W-phase currents. The signals output from the current detection part 206 include, for example, detected current values i^ᵤ, i^ᵥ, and i^_{w} of the U phase, the V phase, and the W phase, respectively.

Based on a signal output from the power stoppage detection part 202 and a control command (hereafter, referred to as the "operation command") indicating an operation condition of the electric motor 10, the rotation speed control part 208 generates and outputs control commands i*_{d} and i*_{q} related to a d-axis current and a q-axis current, respectively, during the power running of the electric motor 10 so that the electric motor 10 rotates at a predetermined rotation speed.

The link voltage command output part 210 outputs a control command related to the link voltage during the regenerative running of the electric motor 10 (hereafter, referred to as the "regenerative link voltage command"). The regenerative link voltage command includes, for example, a command value of the link voltage (hereafter, referred to as the "regenerative link voltage command value") v*_{DC}.

For example, as illustrated in FIG. 4, the regenerative link voltage command value v*_{DC} is set so as to be higher than the voltage of the DC power ("power supply voltage" in the figure) output from the rectifier circuit 30 when power is normally supplied from the external power supply PS to the drive apparatus 100 (hereafter, referred to as "normal time" for convenience). In other words, the regenerative link voltage command value v*_{DC} is set to be higher than the link voltage when electric power is normally supplied from the external power supply PS. The state of electric power being normally supplied does not include a state of instantaneous voltage drop, a state of electric power stoppage, and the like. Also, the regenerative link voltage command value v*_{DC} may be set to be higher than the link voltage when only the electric power from the external power supply PS is supplied among the electric power supply sources (the external power supply PS and the inverter circuit 60) to the DC link circuit 40. Specifically, the regenerative link voltage command value v*_{DC} may be set, for example, to be higher than the upper limit of the range of the rated voltage of the external power supply PS. Also, the regenerative link voltage command value v*_{DC} may be set, for example, to be higher than an average value or a maximum value of the voltage of the external power supply PS or the link voltage in a predetermined period (e.g., the last 10 minutes).

Also, in addition to the conditions described above, the regenerative link voltage command value v*_{DC} may be set to be higher than a voltage required for the power amplifier circuit 70 to cause the magnetic shaft support part 20 to magnetically support the rotating shaft of the turbo compressor 1 (electric motor 10). Accordingly, the magnetic shaft support part 20 can continue to reliably support the rotating shaft of the turbo compressor 1 even during the regenerative running of the electric motor 10.

Referring back to FIG. 1, the PI control part 212 executes PI control based on the deviation between the regenerative link voltage command value v*_{DC} and the link voltage detection value v^_{DC}, and generates and outputs a control command i*_{DC} related to the current of the DC link circuit 40 so that the link voltage becomes the voltage command value v*_{DC}.

The conversion part 214 converts the control command i*_{DC} into control commands i*_{d} and i*_{q} related to the d-axis current and the q-axis current during the regenerative running of the electric motor 10, and outputs the control commands i*_{d} and i*_{q}.

The switching part 216 determines which one of the control commands i*_{d} and i*_{q}, which are output from the rotation speed control part 208 and the conversion part 214, is to be output, based on the signal output from the power stoppage detection part 202 and the operation command, and switches the commands.

In the case where the power running of the electric motor 10 is instructed by the operation command, the switching part 216 selects and outputs the control commands i*_{d} and i*_{q} related to the d-axis current and the q-axis current during the power running of the electric motor 10 that are output from the rotation speed control part 208. On the other hand, in the case where the regenerative running of the electric motor 10 is instructed by the operation command, the switching part 216 selects and outputs the control commands i*_{d} and i*_{q} related to the d-axis current and the q-axis current during the regenerative running of the electric motor 10 that are output from the conversion part 214. Also, in the case where the signal output from the power stoppage detection part 202 indicates the power stoppage state, the switching part 216 may select and output the control commands i*_{d} and i*_{q} related to the d-axis current and the q-axis current during the regenerative running of the electric motor 10 output from the conversion part 214, regardless of the content of the operation command. Accordingly, the control device 200 (the PI control part 220, the conversion part 222, and the drive command generation part 224) can execute appropriate control operations according to the operation condition (the operation being the power running or the regenerative running) of the electric motor 10.

The conversion part 218 converts the detected current values i^ᵤ, i^ᵥ, and i^_{w} of the U phase, the V phase, and the W phase output from the current detection part 206 into detected current values i^_{d} and i^_{q} in the dq coordinate system, and outputs the detected current values i^_{d} and i^_{q}.

Based on the deviation between the control commands i*_{d} and i*_{q} and the detected current values i^_{d} and i^_{q} output from the switching part 216 and the conversion part 218, the PI control part 220 executes PI control, and outputs control commands v*_{d} and v*_{q} related to the voltages of the d-axis and the q-axis of the electric motor 10.

The conversion part 222 converts the control commands v*_{d} and v*_{q} related to the voltages of the d-axis and the q-axis of the electric motor 10, which are output from the PI control part 220, into control commands v*ᵤ, v*ᵥ, and v*_{w} related to the voltages of the U-phase, the V-phase, and the W-phase of the electric motor 10, and outputs the control commands v*ᵤ, v*ᵥ, and v*_{w}.

The drive command generation part 224 generates a drive command to drive the inverter circuit 60, based on the control commands v*ᵤ, v*ᵥ, and v*_{w} related to the respective voltages of the U phase, the V phase, and the W phase of the electric motor 10 output from the conversion part 222. Specifically, the drive command generation part 224 generates a PWM (Pulse Width Modulation) waveform for driving the respective gates Gs1 to Gs6 of the six switching elements, and outputs the PWM waveform to the gates Gs1 to Gs6. Accordingly, the inverter circuit 60 can control the electric motor 10 to execute the power running or the regenerative running under control of the control device 200.

### [Operations of turbo compressor according to comparative example upon a power stoppage]

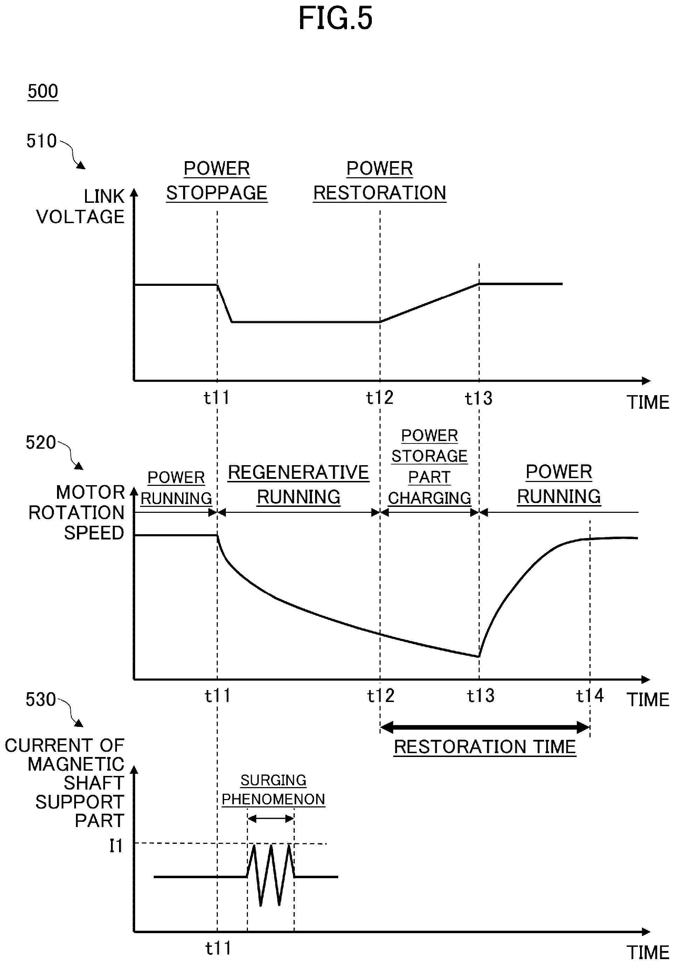

Next, with reference to FIG. 5, operations of a turbo compressor according to a comparative example upon a power stoppage will be described. In the following, in the turbo compressor according to the comparative example, for substantially the same elements as in the turbo compressor 1 according to the present embodiment, the same terms are used but without reference numerals.

FIG. 5 is a time chart 500 illustrating operations of the turbo compressor according to the comparative example upon a power stoppage. The time chart 500 includes time charts 510, 520, and 530 indicating respective changes in time of the link voltage, the rotational speed of the electric motor, and the current of the magnetic shaft support part upon a power stoppage of the turbo compressor according to the comparative example.

In the turbo compressor according to the comparative example, unlike the turbo compressor 1 according to the present embodiment, the regenerative link voltage command value is set to be lower than or equal to the link voltage when electric power is normally supplied from the external power supply to the rectifier circuit (normal time). In particular, in this example, the regenerative link voltage command value is set to be lower than the link voltage at normal time to a certain extent.

As illustrated in FIG. 5, in this example, at time t11, a power stoppage occurs, and the supply of electric power from an external power supply to the turbo compressor (drive apparatus) is stopped. In addition, after the power stoppage state has continued until time t12, the electric power is restored at time t12, and the power supply from the external power supply to the turbo compressor (drive apparatus) is restored.

When the power stoppage occurs at time t11, the operation condition of the electric motor included in the operation command is switched from the power running to the regenerative running.

As described above, the regenerative link voltage command value when the electric motor is in the regenerative running is set to be lower than the link voltage in the normal operation to a certain extent. Therefore, when the link voltage decreasing from time t11 decreases down to a value corresponding to the regenerative link voltage command value, the link voltage is controlled to be constant at the voltage value (see the time chart 510) .

In the power stoppage state after time t11, the electric motor is controlled to be decelerated to execute the regenerative running, and the rotation speed of the electric motor decreases (see the time chart 520).

Also, in this example, the power stoppage occurs in an operation state in which the differential pressure between the preceding stage and the following stage of the turbo compressor is very high. Therefore, due to the deceleration of the turbo compressor (electric motor), a surging phenomenon occurs in the turbo compressor, the load fluctuation associated with the surging phenomenon acts on the compression mechanism (impeller) of the turbo compressor, and the current of the magnetic shaft support part fluctuates (see the time chart 530) .

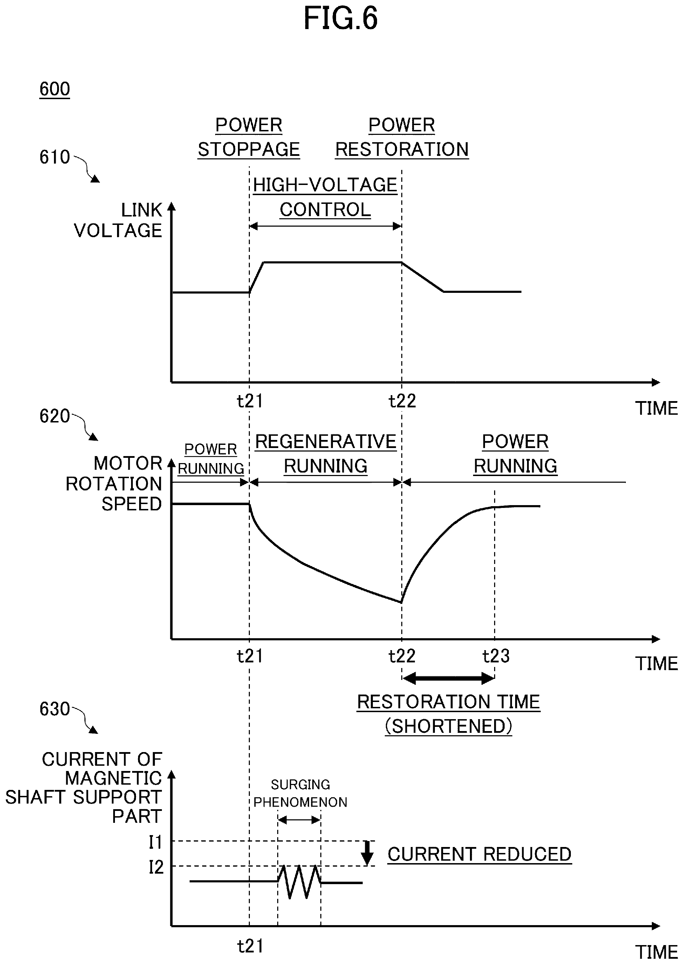

Note that the load fluctuation associated with the surging phenomenon acts on at least one of the radial direction and the thrust direction of the rotating shaft of the turbo compressor (electric motor). In the following, the same applies to the case of the turbo compressor 1 according to the present embodiment (FIG. 6) as will be described later.

In the comparative example, as described above, the link voltage is lower than that in normal time to a certain extent. Accordingly, in order to generate an electromagnetic force having a magnitude to resist the load fluctuation associated with the surging phenomenon; therefore, it may become necessary for the magnetic shaft support part to flow a relatively large current (a maximum current value I1 in the time chart 530).

Also, in a situation where the link voltage is lower than in normal time to a certain extent, it may become necessary to relatively reduce the number of turns of the coil of the magnetic shaft support part in order to achieve a response speed to resist the load fluctuation associated with the surging phenomenon.

As a result, in the turbo compressor according to the comparative example, there is a likelihood that the current capacity of the power amplifier circuit becomes relatively large.

Also, even when the electric power is restored at time t12, as the link voltage upon the power stoppage has been controlled to be relatively low, it is necessary to charge the power storage part with electric power from the external power supply, until the link voltage rises to a link voltage required for the power running of the electric motor. Therefore, the electric motor cannot immediately start the power running, and the rotation of the electric motor continues to decrease until time t13 at which the link voltage reaches a level in normal time.

Further, the link voltage when the electric power is restored is relatively low; therefore, the switch of the inrush current suppression circuit is turned to a cut-off state (open state), and the current supplied from the rectifier circuit to the DC link circuit is limited to be relatively low. Therefore, there is a likelihood that the period from the power restoration (time t12) to the timing (time t13) at which the link voltage reaches the level in normal time becomes relatively long.

As a result, in the turbo compressor according to the comparative example, there is a likelihood that the time (restoration time) required from the power restoration at time t12 to time t13 at which the electric motor starts the power running and recovers at time t14 to the level of the rotational speed before the power stoppage becomes relatively long.

### [Operations of turbo compressor according to present embodiment upon a power stoppage]

Next, with reference to FIG. 6, operations of the turbo compressor 1 according to the present embodiment upon a power stoppage will be described.

FIG. 6 is a time chart 600 illustrating operations of the turbo compressor 1 according to the present embodiment upon a power stoppage. The time chart 600 includes time charts 610, 620, and 630 indicating respective changes in time of the link voltage, the rotational speed of the electric motor 10, and the current of the magnetic shaft support part 20 upon a power stoppage of the turbo compressor 1 according to the present embodiment.

As illustrated in FIG. 5, in this example, at time t21, a power stoppage occurs, and the supply of electric power from the external power supply PS to the turbo compressor 1 (drive apparatus 100) is stopped. In addition, after the power stoppage state has continued until time t22, the electric power is restored at time t22, and the power supply from the external power supply PS to the turbo compressor 1 (drive apparatus 100) is restored.

When the power stoppage occurs at time t21, as in the comparative example described above, the operation condition of the electric motor 10 included in the operation command is switched from the power running to the regenerative running.

As described above, the regenerative link voltage command value v*_{DC} when the electric motor 10 is in the regenerative running is set to be higher than the link voltage in normal time (e.g., the link voltage before a power stoppage). Therefore, when the link voltage increasing from time t21 increases up to a value corresponding to the regenerative link voltage command value v*_{DC}, the link voltage is controlled to be constant at the voltage value (see "high-voltage control" in the time chart 610).

In the power stoppage state after time t21, the electric motor 10 is controlled to be decelerated to execute the regenerative running, and the rotation speed of the electric motor 10 decreases (see the time chart 620).

Also, in this example, as in the comparative example described above, a power stoppage occurs in an operation state in which the differential pressure between the preceding stage and the following stage of the turbo compressor 1 is very high. Therefore, due to the deceleration of the turbo compressor 1 (electric motor 10), a surging phenomenon occurs in the turbo compressor 1, the load fluctuation associated with the surging phenomenon acts on the compression mechanism (impeller) of the turbo compressor 1, and the current of the magnetic shaft support part 20 fluctuates (see the time chart 630).

In the present embodiment, as described above, the link voltage is higher to a certain extent than in normal time. Accordingly, the magnetic shaft support part 20 has a relatively increased number of turns of the coil in order to generate an electromagnetic force of a magnitude and a response speed to resist the load fluctuation associated with a surging phenomenon, to be capable of further suppressing the necessary current to be relatively small. Specifically, the magnetic shaft support part 20 can reduce the maximum value of the necessary current down to a maximum current value I1 that is smaller than a maximum current value I2 in the comparative example.

As a result, in the present embodiment, unlike the comparative example, the current capacity of the power amplifier circuit 70 can be suppressed to be relatively small.

Also, as the link voltage is relatively higher than in normal time when the electric power is restored at time t22, the electric motor 10 can immediately start the power running. Therefore, the rotation speed of the electric motor 10 starts increasing immediately after time t22, and can return to the level before the power stoppage at time t23 after a relatively short time elapses.

Further, when the electric power is restored at time t22, as the link voltage is relatively higher than that in normal time, the control part 56 maintains the switch 54 of the inrush current suppression circuit 50 in the connected state (closed state). Therefore, after the power restoration, the current supplied from the rectifier circuit 30 to the DC link circuit 40 is not limited by the inrush current suppression circuit 50.

As a result, in the turbo compressor 1 according to the present embodiment, the electric motor 10 can start the power running immediately after the power is restored at time t22, and thereby, can relatively shorten the time (restoration time) until time t23, required for the rotation speed to return to the level before the power stoppage.

Also, when an abnormality other than a power stoppage occurs, upon which the turbo compressor 1 needs to be operated at a reduced speed, the drive apparatus 100 and the control device 200 execute substantially the same operations as in this example (FIG. 6), and bring substantially the same effects.

### [Effects]

Next, effects of the turbo compressor 1 (driving device 100) according to the present embodiment will be described.

In the present embodiment, the rectifier circuit 30 converts power of the external power supply PS into predetermined DC power and supplies the DC power to the DC link circuit 40. Also, the electric motor 10 rotationally drives the compression mechanism of the turbo compressor 1. Also, the magnetic shaft support part 20 magnetically supports the rotating shaft of the compression mechanism. Also, the inverter circuit 60 is configured to be capable of driving the electric motor 10 with electric power from the DC link circuit 40, to cause the electric motor 10 to execute regenerative operations of converting power from the rotating shaft into electric energy, and to output regenerative electric power to the DC link circuit 40. Also, the power amplifier circuit 70 drives the magnetic shaft support part 20 with the power from the DC link circuit 40. In addition, the inverter circuit 60 causes the electric motor 10 to execute regenerative operations so that the voltage of the DC link circuit 40 becomes higher than the voltage of the DC link circuit 40 when the electric power of the external power supply PS is normally supplied.

Accordingly, the drive apparatus 100 can make the link voltage during the regenerative operations of the electric motor 10 higher than the voltage when electric power is normally supplied from the external power supply PS (e.g., the voltage during the power running of the electric motor 10). Therefore, a response speed of the electromagnetic force to resist the load fluctuation due to a surging phenomenon occurring in association with the deceleration during the regenerative operations of the electric motor 10 can be achieved by the magnetic shaft support part 20 including a coil having a relatively large number of turns. Also, a magnitude of the electromagnetic force to resist the load fluctuation due to the surging phenomenon occurring in association with the deceleration during the regenerative operations of the electric motor 10 can be achieved by a relatively small current flowing through the magnetic shaft support part 20. Therefore, an increase in the current capacity of the power amplifier circuit 70 that drives the magnetic shaft support part 20 can be suppressed.

Also, in the present embodiment, the inverter circuit 60 may cause the electric motor 10 to execute regenerative operations during a power stoppage in which supplying of electric power from the external power supply PS to the rectifier circuit 30 is stopped.

Accordingly, the drive apparatus 100 can appropriately drive the magnetic shaft support part 20 by using the power amplifier circuit 70 having a smaller current capacity upon a power stoppage.

Also, in the present embodiment, a resistor 52 is provided between the rectifier circuit 30 and the DC link circuit 40 to be capable of limiting a current from the external power supply PS, and a switch 54 is provided for switching between a connected state and a disconnected state of a power path (short-circuit path) short-circuiting both ends of the resistor 52. In addition, the switch 54 may set the short-circuit path to the connected state during a power stoppage in which the power supply from the external power supply PS to the rectifier circuit 30 is stopped.

Accordingly, when the electric power is restored after the power stoppage, the current supplied from the external power supply PS via the rectifier circuit 30 is not limited by the resistor 52. Therefore, after the electric power is restored, the drive apparatus 100 can cause the electric motor 10 to return to the level of the rotation speed before the power stoppage, earlier.

As above, the embodiments have been described, it will be understood that various changes in forms and details may be made therein without deviating from the gist and scope of the claims.

Finally, the present application claims priority to Japanese Patent Application No. 2020-062594 filed on March 31, 2020, the entire contents of which are incorporated herein by reference.

### [List of Reference Numerals]

1 turbo compressor
10 electric motor (electric motor part)
20 magnetic shaft support part (support part)
30 rectifier circuit (rectifier part)
40 DC link circuit (DC link part)
42 power storage part
44 coil part
50 inrush current suppression circuit
52 resistor (limiting element)
54 switch (connection/disconnection part)
56 control part
60 inverter circuit (first drive part)
70 power amplifier circuit (second drive part)
80, 90 current sensor
100 drive
200 control device
202 power stoppage detection part
204 link voltage detection part
206 current detection part
208 rotation speed control part
210 link voltage command output part
212 PI control part
214 conversion part
216 switching part
218 conversion part
220 PI control part
222 conversion part
224 drive command generation part

## Claims

1. A drive apparatus comprising:
a DC link part;
a rectifier part configured to convert power of an external power supply into predetermined DC power, and supply the DC power to the DC link part;
an electric motor part configured to rotationally drive a compression mechanism;
a support part configured to magnetically support a rotating shaft of the compression mechanism;
a first drive part configured to drive the electric motor part with electric power from the DC link part, to cause the electric motor part to execute regenerative operations of converting power from the rotating shaft into electric energy, and to output regenerative electric power to the DC link part; and
a second drive part configured to drive the support part with the electric power from the DC link part,
wherein the first drive part causes the electric motor part to execute the regenerative operations so that a voltage of the DC link part becomes higher than a voltage of the DC link part when the electric power of the external power supply is normally supplied.

2. The drive apparatus as claimed in claim 1, wherein the first drive part causes the electric motor part to execute the regenerative operations during a power stoppage in which power supply from the external power supply to the rectifier part is stopped.

3. The drive apparatus as claimed in claim 1 or 2, further comprising:
a limiting element provided between the rectifier part and the DC link part, and configured to be capable of limiting a current from the external power supply; and
a connection/disconnection part configured to make a power path that short-circuits both ends of the limiting element, switch between a connected state and a disconnected state,
wherein the connection/disconnection part makes the power path switch to the connected state during a power stoppage in which power supply from the external power supply to the rectifier part is stopped.
